# FASCICULE DE BREVET EUROPEEN

(11) **EP 2 509 411 B1**
(45) Date de publication et mention de la délivrance du brevet: **13.04.2016**
(21) Numéro de dépôt: 10803114.7
(22) Date de dépôt: 08.12.2010
(51) Int. Cl.: A01N 1/02

(54) **PROCEDE DE PERFUSION HYPOTHERMIQUE D'UN ORGANE CARDIAQUE ET DISPOSITIF POUR SA MISE EN OEUVRE**
HYPOTHERMISCHES PERFUSIONSVERFAHREN FÜR EIN HERZORGAN SOWIE VORRICHTUNG ZU DESSEN AUSFÜHRUNG
HYPOTHERMIC PERFUSION METHOD FOR A HEART ORGAN AND APPARATUS TO CARRY IT OUT

(30) Priorité: 11.12.2009 FR 0958878
(43) Date de publication de la demande: 17.10.2012
(73) Titulaire: Université Claude Bernard Lyon I, 69622 Villeurbanne Cedex (FR); INSERM (Institut National de la Santé et de la Recherche Médicale), 75654 Paris Cedex 13 (FR)
(72) Inventeur: FERRERA, René, F-69150 Decines (FR)
(74) Mandataire: Sarlin, Laure V.
(86) Numéro de dépôt international: PCT/FR2010/052648
(87) Numéro de publication internationale: WO 2011/077024

(56) Documents cités:
- WO-A1-2009/132018
- US-A1- 2005 147 958

## Description

La présente invention concerne le domaine du prélèvement et de la conservation d'organes en vue de leur transplantation, aussi bien chez l'homme que chez l'animal.

Plus particulièrement, l'invention concerne un procédé de perfusion hypothermique d'un organe cardiaque et un dispositif de perfusion pour sa mise en oeuvre.

Les opérations de transplantations d'organes consistent de façon simplifiée à remplacer au moins un organe déficient chez un patient vivant par l'organe correspondant sain et fonctionnel d'une personne décédée ou, dans le cas de transplantations rénales par exemple, d'une personne vivante ayant concédé à céder l'un de ses reins à un patient malade.

En pratique, le ou les organes qui doivent être transplantés sont prélevés sur un donneur puis conservés immédiatement en hypothermie dans des dispositifs de conservation idoines pour leur transport jusqu'à l'établissement hospitalier où doit intervenir la transplantation chez le patient malade. Cette phase de conservation des organes à transplanter s'avère souvent critique.

En effet, un des principaux problèmes rencontrés dans les opérations de transplantations est la limitation du temps de préservation du ou des greffons en hypothermie. Ainsi pour une greffe de coeur par exemple, on considère que la durée maximale tolérée entre le moment du prélèvement du greffon sur le donneur et sa greffe chez le receveur est de 4 à 6 heures. Ce délai très bref oblige tous les acteurs de la transplantation, des personnels opérant le prélèvement d'organes aux personnels opérant la greffe elle-même, en passant par ceux qui transportent le ou les greffons à agir dans la plus extrême urgence. Pis, ce si bref délai de viabilité de l'organe entre son prélèvement et sa greffe a bien évidemment pour conséquence qu'un grand nombre de transplantations ne peuvent avoir lieu en raison du trop important éloignement entre un donneur et un patient receveur.

On connait à ce jour de nombreuses propositions techniques de conservation d'organes en vue de leur transplantation.

On connait notamment en premier lieu la technique usuelle de préservation d'un greffon consistant en un rapide refroidissement suivi par une immersion froide dans un même liquide. Cette technique ne permet malheureusement pas de préserver au delà de 4-6 heures le greffon dans de bonnes conditions de viabilité, notamment un greffon cardiaque par exemple. En effet, au-delà de cette durée de conservation, on observe des dégradations importantes des tissus de l'organe à transplanter.

Par ailleurs, la littérature disponible dans le domaine de la transplantation, en particulier des transplantations cardiaques, précise que la perfusion améliore largement les conditions de survie d'un greffon cardiaque par rapport à la conservation par immersion. Cependant, la perfusion des greffons cardiaques, permettant un transport en condition battante, nécessite un appareillage adapté encombrant et complexe muni d'un système de recirculation du perfusat sanguin à température corporelle ainsi que d'une source d'énergie autonome. De ce fait, ces appareillages sont souvent jugés trop chers et trop complexes et ils n'ont pas de développement à ce jour pratique en clinique humaine.

Le document WO 2009/132018 A1 décrit un dispositif de perfusion d'organes compact par pressurisation d'un liquide au travers de l'organe. Toutefois, ce dispositif opère une pressurisation de l'organe lui-même par effet de pressions positives de liquides dans l'organe, qui est ainsi "gonflé" de liquide de perfusion. Cependant, cette technique est néfaste pour les tissus organiques et leur conservation.

Vus les inconvénients ou limites des techniques de conservations d'organes en vue de leur transplantation, la présente invention a pour but de proposer une solution de conservation d'organes, notamment de coeurs, par perfusion qui soit à la fois simple à mettre en oeuvre mais dans le même temps permette un gain de temps de conservation important au regard des techniques existantes.

Un autre but de l'invention est de fournir une solution de conservation d'organes qui soit peu coûteuse et permette de réduire les coûts globaux de transplantation.

Conformément à l'invention, ces différents buts sont atteints grâce à un procédé de perfusion hypothermique d'un organe cardique, caractérisé en ce que :
a) On place l'organe cardiaque à perfuser dans un premier réservoir réfrigéré étanche communiquant avec des moyens de pressurisation, ledit réservoir contenant un liquide physiologique de conservation,
b) On attache l'organe à perfuser par une artère à un embout communiquant avec un second réservoir muni d'une évacuation de trop plein vers le premier réservoir, équipée d'une vanne anti-retour,
c) On pressurise, de façon intermittente, le premier réservoir par l'intermédiaire du dispositif de pressurisation pour réaliser une perfusion rétrograde pulsatile comprenant successivement au moins:
   i. Une phase de « systole » de l'organe cardiaque lors de la pressurisation du premier réservoir, au cours de laquelle le liquide physiologique pénètre les cavités de l'organe cardiaque, le perfusat étant évacué dans le second réservoir par l'artère communiquant avec l'embout, et
   ii. Une phase de « diastole » de l'organe cardiaque lorsque le premier réservoir n'est pas pressurisé, au cours de laquelle le perfusat contenu dans le second réservoir exerce une pression hydrostatique dans l'artère liée à l'embout et irrigue le tissu organique.

Le procédé de perfusion hypothermique de l'invention procure une solution nouvelle de conservation d'organes à transplanter, et tout particulièrement de greffons cardiaques, qui présente plusieurs avantages au regard des techniques connues. En premier lieu, le procédé de l'invention permet de rallonger singulièrement la durée de conservation des coeurs à transplanter, en pratique notamment cela permet au moins de doubler la durée de conservation par rapport aux techniques de conservation par immersion hypothermique, et dans certains cas de conserver la viabilité de l'organe jusqu'à 24h après son prélèvement.

Le procédé de l'invention s'avère en second lieu très simple et peu coûteux de mise en oeuvre. Il permet de plus une réduction du coût global de la transplantation de part le rallongement de la durée de conservation qu'il autorise, qui réduit quelque peu l'urgence caractérisant les opérations de transplantations actuelles.

Par ailleurs, le procédé de perfusion de l'invention permet également de procéder à des mesures directes sur l'organe cardiaque prélevé pour caractériser sa viabilité, notamment par l'examen des pressions de perfusats aux entrées et sorties de l'organe.

Selon le procédé de l'invention, la pression de pressurisation du premier réservoir en phase de « diastole » est avantageusement comprise entre 5 et 15 cm H₂O.

Par ailleurs, dans le cadre de l'invention, le liquide physiologique choisi et utilisé peut être un liquide asanguin ou sanguin. En pratique, un liquide asanguin sera préféré. De plus, de façon avantageuse, ce liquide physiologique est en outre ioniquement osmotique.

Préférentiellement, afin de conserver l'organe à transplanter dans les meilleures conditions, on maintient le premier réservoir à une température comprise entre 2°C et 8°C. Cette température correspond à la température idéale de conservation de l'organe.

Dans un cadre préférentiel de mise en oeuvre du procédé de l'invention, l'organe perfusé est un coeur non battant, lié par l'aorte à l'embout de communication avec le second réservoir. En effet, le procédé de l'invention a été spécifiquement développé et mis au point pour la conservation et la transplantation de greffons cardiaques, le cas échéant issus de patients âgés, voire de patients justes décédés, ce qui a ce jour ne se pratique jamais pour des greffes de coeur.

Dans ce cadre particulier de conservation et perfusion de greffon cardiaque, on filtre de façon avantageuse le liquide physiologique à l'entrée de l'oreillette gauche lors des phases de « systole ».

Selon une autre caractéristique avantageuse du procédé de l'invention mis en oeuvre sur un coeur non battant, on exerce une pression hydrostatique dans l'aorte lors des phases de « diastole», la pression provoquant la fermeture des valvules aortiques et la perfusion rétrograde du myocarde par les coronaires, le perfusat ayant irrigué l'organe étant évacué vers le premier réservoir par le sinus coronaire via l'oreillette droite.

Toujours selon le procédé de l'invention, on mesure dans une forme préférée de mise en oeuvre le débit coronaire et les résistances coronariennes lors des phases et de « diastole » par l'intermédiaire de capteurs positionnés dans le second réservoir. De telles mesures permettent avantageusement de renseigner la viabilité de l'organe perfusé en vue de sa transplantation.

Un autre objet de l'invention concerne également la fourniture d'un dispositif de perfusion hypothermique d'un organe cardiaque adapté à la mise en oeuvre du procédé de perfusion précédemment présenté. Ainsi ce dispositif particulier comporte :
a. Un premier réservoir étanche apte à contenir un liquide physiologique ;
b. Un second réservoir étanche communiquant de façon étanche par un embout avec le volume interne du premier réservoir ;
c. Des moyens de réfrigération du premier réservoir et de maintien à température sensiblement constante ;
d. Des moyens de pressurisation intermittente du volume interne du premier réservoir.

Selon l'invention, le second réservoir comporte un organe d'évacuation de sécurité muni d'une vanne anti-retour communiquant avec le premier réservoir.

Toujours selon l'invention, le second réservoir comporte un organe d'évacuation de surpression interne muni d'un filtre et d'une vanne anti-retour.

De façon avantageuse, les moyens de pressurisation comportent un ensemble compresseur d'air relié de façon étanche par une canalisation idoine au volume interne du premier réservoir.

Toujours selon l'invention, l'ensemble compresseur d'air comporte un générateur d'air comprimé délivrant un débit d'air sensiblement constant relié à une électrovanne commandée par un pressostat pour alimenter de façon discontinue le premier réservoir via ladite canalisation et réaliser un pressurisation intermittente dudit réservoir.

Avantageusement par ailleurs, l'électrovanne et le pressostat sont alimentés par une batterie ou par le secteur.

Enfin, le second réservoir peut comporter des capteurs de pression permettant la mesure du débit et des résistances coronaires.

Diverses autres caractéristiques ressortent de la description faite ci-dessous en référence aux dessins annexés qui montrent, à titre d'exemples non limitatifs, des formes de réalisation de l'objet de l'invention. Sur les figures annexées :
- la **figure 1** représente un dispositif de perfusion conforme à l'invention pendant une phase de « systole » d'un coeur.
- la **figure 2** est une représentation analogue à celle de la **figure 1** mais pendant une phase de « diastole » du coeur.

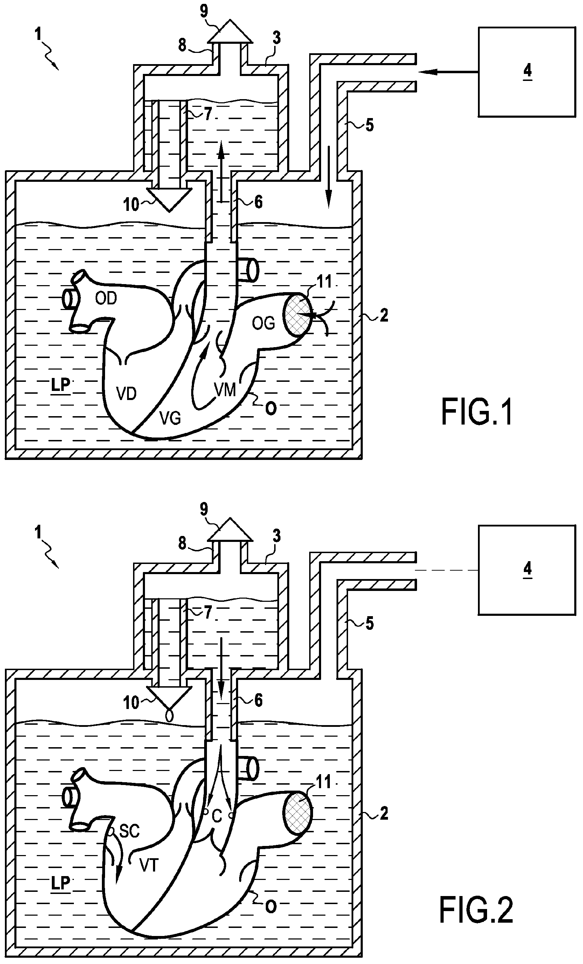

Les **figures 1** et **2** représentent un dispositif **1** de perfusion hypothermique d'organes conforme à l'invention dans un mode préféré de réalisation. Sur ces deux figures, le dispositif **1** de perfusion contient un organe **O** perfusé au moyen du dispositif **1**, cet organe étant dans le cas présenté un coeur non battant. Toutefois, le dispositif **1** ne se limite pas à la perfusion de coeurs et peut également être employé pour la perfusion hypothermique d'autres organes.

Le dispositif **1** de perfusion de l'invention comporte un premier réservoir 2 étanche surmonté d'un second réservoir **3** également étanche et qui communique avec le premier réservoir **2** par l'intermédiaire d'un embout 6 formant une canule sur laquelle est attaché l'organe **O** à perfuser, baignant dans un liquide physiologique **LP** contenu dans le premier réservoir **2**.

Le premier réservoir **2** communique également avec un dispositif de pressurisation **4** par l'intermédiaire d'une conduite **5** reliant l'intérieur du premier réservoir **2** au dispositif de pressurisation afin de permettre la mise sous pression du volume interne du premier réservoir **2** et du liquide physiologique à l'intérieur pour réaliser la perfusion de l'organe **O**.

Le premier réservoir **2** est doté ou coopère avec des moyens de réfrigération (non représentés) et maintient de ce réservoir et du liquide physiologique **LP** qu'il contient à une température de 2°C à 8°C, et préférentiellement de l'ordre de 4°C, si possible sensiblement constante.

Au dessus du premier réservoir **2**, le second réservoir **3** constitue un système de perfusion en U, muni dans sa paroi de fond commune avec la paroi supérieure du premier réservoir **2**, d'un organe **7** d'évacuation de sécurité formé par un canal d'évacuation de trop plein communiquant avec le premier réservoir **2** et équipé d'une vanne anti-retour **10**. Le second réservoir **3** comporte également un organe d'évacuation **8** de surpression interne muni d'un filtre et d'une vanne anti-retour **9**, disposés dans sa paroi supérieure. Le second réservoir, le conduit **6** et l'évacuation de trop plein **7** forment ainsi un dispositif de circulation en U du liquide physiologique **LP** entre le premier **2** et le second réservoir **3** permettant la perfusion de l'organe **O** comme il sera décrit par la suite.

Le dispositif de pressurisation **4** peut être de tout type permettant la réalisation d'une pressurisation intermittente à pression contrôlée du volume interne du premier réservoir **2**. Dans un mode de réalisation préféré, ce dispositif **4** comporte un ensemble compresseur d'air relié de façon étanche par la conduite **5** au volume interne du premier réservoir **2**. L'ensemble compresseur comporte avantageusement un générateur d'air comprimé délivrant un débit d'air sensiblement constant relié à une électrovanne commandée par un pressostat pour alimenter de façon discontinue le premier réservoir **2** via la canalisation **5** et réaliser une pressurisation intermittente dudit réservoir. De façon avantageuse, l'électrovanne et le pressostat sont alimentés par une batterie d'accumulateurs ou par le secteur électrique.

En variante, le dispositif de pressurisation peut également être constitué d'une bouteille d'air comprimé munie d'un détenteur à débit mètre délivrant un débit constant d'air comprimé d'environ 250 ml/minute (soit 360 litres/24 heures de fonctionnement). Une électrovanne à une entrée et 2 sorties dont une sortie de fuite vers l'extérieur, monitorée par un pressostat possédant deux consignes de pression (0 et 100 mm Hg). L'ensemble électrovanne/pressostat sert alors à alimenter façon discontinue, en gaz, le premier réservoir **2** à une pression déterminée par le pressostat.

Quelque soit la structure du dispositif de pressurisation, celui-ci a pour fonction d'actionner et entretenir la perfusion de l'organe **O** dans le premier réservoir **2** suivant un principe de perfusion rétrograde intermittente à pression imposée avec recyclage du milieu.

L'invention propose en effet la mise en oeuvre d'un procédé de perfusion de l'organe **O** semblable à la perfusion physiologique des organes dans le corps humain.

Ce procédé de perfusion se déroule de la façon suivante.

On place dans un premier temps l'organe **O,** en l'espèce dans l'exemple représenté un coeur, non battant, à perfuser en vue de sa transplantation dans le liquide physiologique LP dans le premier réservoir **2** du dispositif de perfusion **1**, maintenu à température froide de 4°C environ. Ce liquide physiologique **LP** est de préférence un liquide asanguin ioniquement osmotique, couramment employé dans le milieu médical.

On attache ensuite l'organe **O** par une artère, l'aorte par exemple dans le cas d'un coeur, sur l'extrémité inférieure du conduit **6** reliant le premier et le second réservoir **2**, **3**.

Une fois l'organe attaché, on actionne ensuite le dispositif de pressurisation **4** pour exercer une pressurisation pulsatile du liquide physiologique **LP** dans le réservoir **2** et ainsi perfuser l'organe **O**. On distingue alors deux phases successives distinctes de perfusion dudit organe **O**, ces deux phases étant représentées schématiquement sur les **figures 1** et **2**.

La première phase de perfusion est une phase de surpression à l'intérieur du réservoir **2**, dite de « systole ». Le dispositif de pressurisation **4** créée dans le réservoir **2** étanche une surpression comprise entre 5 et 15 cm H₂O, qui est transmise au liquide physiologique **LP** qui pénètre dans l'organe **O** et réalise ainsi un effet de massage : le liquide entre dans l'oreillette gauche **OG** qui est munie d'un filtre **11**, envahit le ventricule gauche **VG** par la valve mitrale **VM** ouverte et traverse la valve aortique pour ensuite ressortir via le conduit **6** dans le second réservoir **3**. Ce réservoir **3** est équipé du conduit **7** qui définit un niveau constant et maximum du perfusat dans ce second réservoir (pression de perfusion imposée). La vanne anti-retour **10** fixée sur l'extrémité inférieure du conduit **7** assure l'étanchéité vis-à-vis du premier réservoir **2**.

Consécutivement à la phase de systole intervient une phase de décompression dite de « diastole ».

Au cours de cette seconde phase, le dispositif de pressurisation **4** n'exerce plus aucune pression dans le premier réservoir **2**. Le perfusat ou liquide physiologique **LP** contenu dans le second réservoir **3** exerce alors une pression hydrostatique dans l'aorte du coeur **O** par le conduit **6**. Cette pression hydrostatique provoque la fermeture des valvules aortiques et le myocarde est alors perfusé de manière rétrograde par les coronaires **C**, imitant ainsi une diastole physiologique. Le perfusat irrigue ensuite le tissu cardiaque avant de se regrouper puis sortir au niveau du sinus coronaire **SC**. Il est ensuite recyclé en sortant soit par les veines caves soit par la valvule tricuspide **VT** via l'artère pulmonaire dans le premier réservoir.

L'excès de perfusat dans le réservoir **3** retombe dans le premier réservoir **2** par le conduit **7**.

Ainsi, le procédé et le dispositif 1 de perfusion de l'invention permettent de conserver un organe **O** tel qu'un coeur non battant en réalisant une perfusion hypothermique intermittente de celui-ci, qui permet d'augmenter la durée de conservation de l'organe **O** en vue de sa transplantation. La perfusion réalisée est pulsatile et donc conforme à la perfusion physiologique, ce qui favorise la conservation de l'organe. En effet, cette pulsatilité assure en continu un effet massage de l'organe **O** et la circulation du perfusat dans l'organe par le jeu des surpressions-dépressions entretenues par le dispositif **1** et son dispositif de pressurisation.

De plus, le dispositif **1** de perfusion de l'invention permet d'assurer un débullage permanent du liquide physiologique ainsi que de l'organe grâce au mécanisme de « diastole » entretenu uniquement par gravité consécutivement aux surpressions imposées. Ceci constitue un avantage essentiel du procédé et du dispositif de l'invention car cela supprime les risques d'embolies ainsi qu'une perfusion en continu par du tissu organique.

Lorsque l'organe perfusé est un coeur comme dans l'exemple représenté sur les figures, le procédé de perfusion de l'invention prévoit par ailleurs dans une forme particulière de réalisation que l'on mesure le débit coronaire et la compliance ventriculaire lors des phases de « diastole ». Cette mesure peut être effectuée par l'intermédiaire de capteurs positionnés dans le second réservoir 3.

L'invention propose ainsi un procédé de perfusion et son dispositif de mise en oeuvre qui sont simples et directement applicables aux procédures cliniques de conservation d'organes en vue de leur transplantation, et qui permettent d'augmenter considérablement la durée de conservation des organes entre leur prélèvement et leur transplantation.

## Revendications

1. Procédé de perfusion hypothermique d'un organe cardiaque (0), **caractérisé en ce que** :
a. On place l'organe cardiaque à perfuser dans un premier réservoir (2) réfrigéré étanche communiquant avec des moyens de pressurisation (4), ledit réservoir contenant un liquide physiologique (LP) de conservation,
b. On attache l'organe cardiaque à perfuser par une artère à un embout (6) communiquant avec un second réservoir (3) muni d'une évacuation (7) de trop plein vers le premier réservoir équipée d'une vanne anti-retour (10),
c. On pressurise de façon intermittente le premier réservoir (2) par l'intermédiaire du dispositif de pressurisation (4) pour réaliser une perfusion rétrograde pulsatile comprenant successivement au moins :
i. Une phase de « systole » de l'organe cardiaque (0) lors de la pressurisation du premier réservoir, au cours de laquelle le liquide physiologique pénètre les cavités de l'organe, le perfusat étant évacué dans le second réservoir par l'artère communiquant avec l'embout (6), et
ii. Une phase de « diastole » de l'organe cardiaque lorsque le premier réservoir n'est pas pressurisé, au cours de laquelle le perfusat contenu dans le second réservoir exerce une pression hydrostatique dans l'artère liée à l'embout et irrigue le tissu organique.

2. Procédé de perfusion hypothermique selon la revendication 1, **caractérisé en ce que** la pression de pressurisation du premier réservoir en phase de « systole » est comprise entre 5 et 15 cm H₂O.

3. Procédé de perfusion hypothermique selon la revendication 1 ou 2, **caractérisé en ce que** le liquide physiologique est un liquide asanguin ou sanguin.

4. Procédé de perfusion hypothermique d'organe selon l'une des revendications 1 à 3, **caractérisé en ce que** le liquide physiologique est ioniquement osmotique.

5. Procédé de perfusion hypothermique d'un organe selon l'une des revendications 1 à 4, **caractérisé en ce que** l'on maintient le premier réservoir (2) à une température comprise entre 2°C et 8°C.

6. Procédé de perfusion hypothermique d'un organe selon l'une des revendications 1 à 5, **caractérisé en ce que** l'organe cardiaque (0) perfusé est un coeur non battant, lié par l'aorte à l'embout de communication (6) avec le second réservoir (3).

7. Procédé de perfusion hypothermique selon la revendication 6, **caractérisé en ce que** l'on filtre le liquide physiologique à l'entrée de l'oreillette gauche (11) lors des phases de « systole ».

8. Procédé de perfusion hypothermique selon la revendication 6 ou 7; **caractérisé en ce que** l'on exerce une pression hydrostatique dans l'aorte lors des phases de « diastole », la pression provoquant la fermeture des valvules aortiques et la perfusion rétrograde du myocarde par les coronaires (C), le perfusat ayant irrigué l'organe cardiaque étant évacué vers le premier réservoir (2) par le sinus coronaire via l'oreillette droite (OD).

9. Procédé de perfusion hypothermique d'un organe selon l'une des revendications 6 à 8, **caractérisé en ce que** l'on mesure le débit coronaire et la compliance ventriculaire lors des phases de « diastole » par l'intermédiaire de capteurs positionnés dans le second réservoir (3).

10. Dispositif (1) de perfusion hypothermique d'un organe cardiaque, comportant:
a. Un premier réservoir (2) étanche apte à contenir un liquide physiologique (LP);
b. Un second réservoir (3) étanche communiquant de façon étanche par un embout (6) avec le volume interne du premier réservoir;
c. Des moyens de réfrigération du premier réservoir (2) et de maintien à température sensiblement constante;
d. Un dispositif (4) de pressurisation intermittente du volume interne du premier réservoir, **caractérisé en ce que** :
- le premier réservoir (2) communique avec le dispositif de pressurisation (4) par l'intermédiaire d'une conduite (5) reliant l'intérieur du premier réservoir (2) au dispositif de pressurisation (4) afin de permettre la mise sous pression du volume interne du premier réservoir (2) et du liquide physiologique à l'intérieur pour réaliser la perfusion de l'organe (0),
- le second réservoir (3) constitue un système de perfusion en U, muni dans sa paroi de fond commune avec la paroi supérieure du premier réservoir (2), d'un organe (7) d'évacuation de sécurité formé par un canal d'évacuation de trop plein communiquant avec le premier réservoir (2) et équipé d'une vanne anti-retour (10).

11. Dispositif selon la revendication 10, **caractérisé en ce que** le second réservoir (3) comporte un organe d'évacuation (8) de surpression interne muni d'un filtre et d'une vanne anti-retour (9).

12. Dispositif selon la revendication 10 ou 11, **caractérisé en ce que** le dispositif de pressurisation (4) comportent un ensemble compresseur d'air relié de façon étanche par une canalisation (5) idoine au volume interne du premier réservoir (2).

13. Dispositif selon la revendication 12, **caractérisé en ce que** l'ensemble compresseur d'air comporte un générateur d'air comprimé délivrant un débit d'air sensiblement constant relié à une électrovanne commandée par un pressostat pour alimenter de façon discontinue le premier réservoir via ladite canalisation et réaliser une pressurisation intermittente dudit réservoir.

14. Dispositif selon la revendication 13, **caractérisé en ce que** l'électrovanne et le pressostat sont alimentés par une batterie ou par le secteur.

15. Dispositif selon l'une des revendications 10 à 14, **caractérisé en ce que** le second réservoir (3) comporte des capteurs de mesure du débit coronaire et de la résistance coronaire d'un organe cardiaque (0).

## Patentansprüche

1. Hypothermisches Perfusionsverfahren eines Herzorgans (O), **dadurch gekennzeichnet, dass**
a. man das Herzorgan, das zu perfundieren ist, in einen ersten gekühlten dichten Behälter (2), der mit Druckbeaufschlagungsmitteln (4) in Verbindung steht, platziert, wobei der Behälter eine physiologische Konservierungsflüssigkeit (LP) enthält,
b. man das Herzorgan, das zu perfundieren ist, durch eine Arterie mit einem Ansatz (6) verbindet, der mit einem zweiten Behälter (3), der mit einer Überflussableitung (7) zu dem ersten Behälter, die mit einem Rückschlagventil (10) ausgestattet ist, versehen ist, in Verbindung steht,
c. man intermittierend den ersten Behälter (2) über die Druckbeaufschlagungsvorrichtung (4) mit Druck beaufschlagt, um eine retrograde pulsierende Perfusion auszuführen, die nacheinander Folgendes umfasst:
i. eine "Systol"-Phase des Herzorgans (O) bei der Druckbeaufschlagung des ersten Behälters, in deren Verlauf die physiologische Flüssigkeit in die Hohlräume des Organs eindringt, wobei das Perfusat in den zweiten Behälter von der Arterie, die mit dem Ansatz (6) in Verbindung steht abgeleitet wird, und
ii. eine "Diastol"-Phase des Herzorgans, wenn der erste Behälter nicht mit Druck beaufschlagt wird, in deren Verlauf das Perfusat, das in dem zweiten Behälter enthalten ist, einen hydrostatischen Druck in der Arterie, die mit dem Ansatz verbunden ist, und das organische Gewebe bewässert, ausübt.

2. Hypothermisches Perfusionsverfahren nach Anspruch 1, **dadurch gekennzeichnet, dass** der Druckbeaufschlagungsdruck des ersten Behälters in der "Systol"-Phase zwischen 5 und 15 cm H₂O liegt.

3. Hypothermisches Perfusionsverfahren nach Anspruch 1 oder 2, **dadurch gekennzeichnet, dass** die physiologische Flüssigkeit eine blutlose Flüssigkeit oder Blutflüssigkeit ist.

4. Hypothermisches Perfusionsverfahren eines Organs nach einem der Ansprüche 1 bis 3, **dadurch gekennzeichnet, dass** die physiologische Flüssigkeit eine ionisch osmotische Flüssigkeit ist.

5. Hypothermisches Perfusionsverfahren eines Organs nach einem der Ansprüche 1 bis 4, **dadurch gekennzeichnet, dass** man den ersten Behälter (2) auf einer Temperatur zwischen 2 °C und 8 °C hält.

6. Hypothermisches Perfusionsverfahren eines Organs nach einem der Ansprüche 1 bis 5, **dadurch gekennzeichnet, dass** das perfundiert Herzorgan (O) ein nicht schlagendes Herz ist, das durch die Aorta mit dem Verbindungsansatz (6) mit dem zweiten Behälter (3) verbunden ist.

7. Hypothermisches Perfusionsverfahren nach Anspruch 6, **dadurch gekennzeichnet, dass** man die physiologische Flüssigkeit am Eingang des linken Vorhofs (11) bei den "Systol"-Phasen filtert.

8. Hypothermisches Perfusionsverfahren nach Anspruch 6 oder 7, **dadurch gekennzeichnet, dass** man einen hydrostatischen Druck in der Aorta bei "Diastol"-Phasen ausübt, wobei der Druck das Schließen der Aortaklappen und die retrograde Perfusion des Myokards durch die Koronararterien (C) bewirkt, wobei das Perfusat, das das Herzorgan bewässert hat, zu dem ersten Behälter (2) durch den Sinus coronarius über den rechten Vorhof (OD) abgeleitet wird.

9. Hypothermisches Perfusionsverfahren eines Organs nach einem der Ansprüche 6 bis 8, **dadurch gekennzeichnet, dass** man den koronaren Durchfluss und die ventrikuläre Compliance bei den "Diastol"-Phasen über Fühler, die in dem zweiten Behälter (3) positioniert sind, misst.

10. Vorrichtung (1) zur hypothermischen Perfusion eines Herzorgans, die Folgendes umfasst:
a. einen ersten dichten Behälter (2), der geeignet ist, um eine physiologische Flüssigkeit (LP) zu enthalten,
b. einen zweiten dichten Behälter (3), der dicht durch einen Ansatz (6) mit dem Innenraum des ersten Behälters in Verbindung steht,
c. Mittel zum Kühlen des ersten Behälters (2) und zum Halten auf im Wesentlichen konstanter Temperatur,
d. eine Vorrichtung (4) zur intermittierenden Druckbeaufschlagung des Innenraums des ersten Behälters, **dadurch gekennzeichnet, dass**
- der erste Behälter (2) mit der Druckbeaufschlagungsvorrichtung (4) über eine Leitung (5) in Verbindung steht, die das Innere des ersten Behälters (2) mit der Druckbeaufschlagungsvorrichtung (4) verbindet, um das Druckbeaufschlagen des Innenraums des ersten Behälters (2) und der physiologischen Flüssigkeit im Inneren zu erlauben, um die Perfusion des Organs (O) auszuführen,
- der zweite Behälter (3) ein Perfusionssystem in U-Form bildet, das in seiner gemeinsamen Bodenwand mit der oberen Wand des ersten Behälters (2) mit einem Sicherheitsorgan (7) zur Ableitung versehen ist, das durch einen Überflussableitungskanal gebildet ist, der mit dem ersten Behälter (2) in Verbindung steht und mit einem Rückschlagventil (10) ausgestattet ist.

11. Vorrichtung nach Anspruch 10, **dadurch gekennzeichnet, dass** der zweite Behälter (3) ein Organ (8) zur Ableitung inneren Überdrucks, das mit einem Filter und einem Rückschlagventil (9) versehen ist, umfasst.

12. Vorrichtung nach Anspruch 10 oder 11, **dadurch gekennzeichnet, dass** die Druckbeaufschlagungsvorrichtung (4) eine Luftkompressionseinheit umfasst, die auf dichte Art mit einer geeigneten Kanalisation (5) mit dem Innenraum des ersten Behälters (2) verbunden ist.

13. Vorrichtung nach Anspruch 12, **dadurch gekennzeichnet, dass** die Luftkompressionseinheit einen Druckluftgenerator umfasst, der einen im Wesentlichen konstanten Luftdurchfluss liefert, der mit einem Magnetventil verbunden ist, das durch einen Druckregler gesteuert wird, um den ersten Behälter über die Kanalisation diskontinuierlich zu versorgen und eine intermittierende Druckbeaufschlagung des Behälters auszuführen.

14. Vorrichtung nach Anspruch 13, **dadurch gekennzeichnet, dass** das Magnetventil und der Druckregler durch eine Batterie oder durch den Netzstrom versorgt werden.

15. Vorrichtung nach einem der Ansprüche 10 bis 14, **dadurch gekennzeichnet, dass** der zweite Behälter (3) Meßfühler des koronaren Durchsatzes und des koronaren Widerstands eines Herzorgans (O) umfasst.

## Claims

1. A method for hypothermic perfusion of a cardiac organ (0), **characterized in that**:
a. the cardiac organ to be perfused is placed in a first tank (2), which is refrigerated and sealed and which communicates with pressurizing means (4), said tank containing a physiological liquid (LP) for storage,
b. the cardiac organ to be perfused is attached by an artery to a nozzle (6) communicating with a second tank (3), which is provided with an overflow outlet (7) to the first tank, which overflow outlet (7) is equipped with a non-return valve (10),
c. the first tank (2) is intermittently pressurized by way of the pressurizing device (4) in order to perform retrograde pulsatile perfusion, comprising successively at least:
i. a "systole" phase of the cardiac organ (0) during the pressurization of the first tank, in the course of which the physiological liquid penetrates the cavities of the organ, the perfusate being evacuated into the second tank via the artery communicating with the nozzle (6), and
ii. a "diastole" phase of the cardiac organ when the first tank is not pressurized, in the course of which the perfusate contained in the second tank exerts a hydrostatic pressure in the artery connected to the nozzle and irrigates the organic tissue.

2. The method of hypothermic perfusion as claimed in claim 1, **characterized in that** the pressure for pressurizing the first tank in the "systole" phase is between 5 and 15 cm H₂O.

3. The method of hypothermic perfusion as claimed in claim 1 or 2, **characterized in that** the physiological liquid is a non-sanguineous or sanguineous liquid.

4. The method of hypothermic organ perfusion as claimed in one of claims 1 through 3, **characterized in that** the physiological liquid is ionically osmotic.

5. The method of hypothermic organ perfusion as claimed in one of claims 1 through 4, **characterized in that** the first tank (2) is kept at a temperature of between 2°C and 8°C.

6. The method of hypothermic organic perfusion as claimed in one of claims 1 through 5, **characterized in that** the perfused cardiac organ (0) is a non-beating heart, connected by the aorta to the nozzle (6) communicating with the second tank (3).

7. The method of hypothermic perfusion as claimed in claim 6, **characterized in that** the physiological liquid is filtered at the inlet of the left atrium (11) during the "systole" phases.

8. The method of hypothermic perfusion as claimed in claim 6 or 7, **characterized in that** a hydrostatic pressure is exerted in the aorta during the "diastole" phases, the pressure causing the closure of the aortic valves and the retrograde perfusion of the myocardium via the coronary vessels (C), the perfusate that has irrigated the cardiac organ being evacuated into the first tank (2) through the coronary sinus via the right atrium (OD).

9. The method of hypothermic organ perfusion as claimed in one of claims 6 through 8, **characterized in that** the coronary flow rate and the ventricular compliance are measured during the "diastole" phases by way of sensors positioned in the second tank (3).

10. A device (1) for hypothermic perfusion of a cardiac organ, comprising:
a. a first sealed tank (2) able to contain a physiological liquid (LP);
b. a second sealed tank (3) communicating, in a sealed manner, with the internal volume of the first tank via a nozzle (6);
c. means for refrigerating the first tank (2) and keeping the latter at a substantially constant temperature;
d. a device (4) for intermittently pressurizing the internal volume of the first tank, **characterized in that** :
- The first tank (2) also communicates with a pressurizing device (4) by way of a conduit (5) connecting the interior of the first tank (2) to the pressurizing device (4), so as to permit the pressurization of the internal volume of the first tank (2), and of the physiological liquid inside the latter, in order to perform perfusion of the organ (0),
- the second tank (3) constitutes a U-type perfusion system which, in its bottom wall common with the upper wall of the first tank (2), is provided with a safety outlet element (7) formed by an overflow outlet duct which communicates with the first tank (2) and is equipped with a non-return valve (10).

11. The device as claimed in claim 10, **characterized in that** the second tank (3) has an outlet (8) for an internal overpressure, which outlet (8) is provided with a filter and with a non-return valve (9).

12. The device as claimed in claim 10 or 11, **characterized in that** the pressurizing device (4) have an air compressor assembly connected in a sealed manner to the internal volume of the first tank (2) via a suitable channel (5).

13. The device as claimed in claim 12, **characterized in that** the air compressor assembly has a compressed-air generator, which delivers a substantially constant air flow and which is connected to a solenoid valve controlled by a pressure regulator in order to feed the first tank discontinuously via said channel and perform intermittent pressurization of said tank.

14. The device as claimed in claim 13, **characterized in that** the solenoid valve and the pressure regulator are powered by a battery or by the mains.

15. The device as claimed in one of claims 10 through 14, **characterized in that** the second tank (3) has sensors for measuring the coronary flow rate and the coronary resistance of a cardiac organ (0).
